# EUROPÄISCHE PATENTSCHRIFT

(11) **EP 3 205 844 B1**
(45) Veröffentlichungstag und Bekanntmachung des Hinweises auf die Patenterteilung: **14.11.2018**
(21) Anmeldenummer: 17152727.8
(22) Anmeldetag: 23.01.2017
(51) Int. Cl.: F01D 25/24, F01D 25/16

(54) **GEHÄUSEELEMENT FÜR EIN TURBINENZWISCHENGEHÄUSE**
HOUSING ELEMENT FOR AN INTERMEDIATE TURBINE HOUSING
ÉLÉMENT DE CARTER POUR CARTER INTERMÉDIAIRE DE TURBINE

(30) Priorität: 08.02.2016 DE 102016201863
(43) Veröffentlichungstag der Anmeldung: 16.08.2017
(73) Patentinhaber: MTU Aero Engines AG, 80995 München (DE)
(72) Erfinder: Bickmeier, Wolfgang, 85238 Petershausen (DE); Kufner, Petra, 85586 Poing (DE)

(56) Entgegenhaltungen:
- EP-A1- 2 636 855
- EP-A2- 1 149 986
- US-A- 5 483 792

## Beschreibung

Die vorliegende Erfindung betrifft ein Gehäuseelement für ein Turbinenzwischengehäuse einer Gasturbine, insbesondere Fluggasturbine, wobei das Gehäuseelement im Turbinenzwischengehäuse radial außen zwischen jeweils zwei von mehreren in Umfangsrichtung verteilt angeordneten Stützstreben einsetzbar oder eingesetzt ist, wobei das Gehäuseelement flächig ausgebildet ist und bezogen auf seine radiale Außenseite mehrere Vertiefungen aufweist.

Derartige Gehäuseelemente dienen mittels der Vertiefungen einer möglichst gleichmäßigen Spannungsverteilung über einen Querschnittsverlauf mit konstantem Flächeninhalt entlang des Umfangs eines Turbinenzwischengehäuses zwischen jeweils zwei Stützstreben. Dabei wird die erforderliche Steifigkeit überwiegend durch die radial außen liegende Kontur mit den mehreren Vertiefungen bestimmt. Die Vertiefungen können auch als insbesondere integral ausgebildete Verstärkung des Gehäuseelements gesehen werden.

Dokumente EP2636855, US5483792 und EP1149986 offenbaren Gehäuseelemente aus dem Stand der Technik. Im Hinblick auf einen effizienteren Betrieb von Gasturbinen, insbesondere Fluggasturbinen wurde erkannt, dass die Gehäuseelemente ein hohes Bauteilgewicht aufweisen, was zu einem höheren spezifischen Kraftstoffverbrauch der Gasturbine im Betrieb führt.

Aufgabe der Erfindung ist, ein Gehäuseelement derart zu verbessern, dass den obigen Nachteilen entgegengewirkt werden kann.

Zur Lösung dieser Aufgabe wird vorgeschlagen, dass das Gehäuseelement auf seiner radialen Innenseite wenigstens eine Aussparung aufweist, die außerhalb der Bereiche angeordnet ist, in denen Vertiefungen auf der radialen Außenseite ausgebildet sind.

Eine derartige Aussparung führt zu einem reduzierten Bauteilgewicht des Gehäuseelements bei gleichzeitig beibehaltener Steifigkeit aufgrund der nicht veränderten radial außen liegenden Kontur mit den Vertiefungen. Es wurde von den Erfindern erkannt, dass in den Bereichen, in denen radial außen keine Vertiefungen vorgesehen sind, die Materialdicke nicht im Wesentlichen konstant sein muss, sondern dass es Bereiche gibt, bei denen eine reduzierte Materialdicke ausreichend ist, ohne die erforderliche Steifigkeit des Gehäuseelements wesentlich zu beeinträchtigen.

Weiterbildend wird vorgeschlagen, dass die Vertiefungen so ausgebildet sind, dass im Gehäuseelement mehrere Flächen auf unterschiedlichem Niveau ausgebildet sind, die miteinander über stufenartige Kanten verbunden sind. Es kann in diesem Zusammenhang davon ausgegangen werden, dass durch die Ausbildung von stufenartigen Kanten, vorzugsweise auch auf der radialen Innenseite, eine ausreichende Steifigkeit des Gehäuseelements beibehalten werden kann, insbesondere unter der Berücksichtigung, dass derartige stufenartige Kanten wie Verstärkungsrippen wirken.

Um einen insgesamt günstigen Spannungsverlauf innerhalb des Gehäuseelement zu erreichen, ist es bevorzugt, dass die Aussparung auf der radialen Innenseite eine Umfangskontur aufweist, die wenigstens abschnittsweise komplementär zu einer Umfangskontur einer auf der radialen Außenseite ausgebildeten Vertiefung ausgebildet ist.

Vorzugsweise sind wenigstens 30%, weiter bevorzugt wenigstens 50%, noch weiter bevorzugt wenigstens 70% des im Wesentlichen flächig ausgebildeten Gehäuseelements durch Bereiche gebildet, in denen entweder eine Aussparung auf der radialen Innenseite oder eine Vertiefung auf der radialen Außenseite des Gehäuseelements vorliegt. Anders ausgedrückt liegt die Wahrscheinlichkeit, dass bei einem gedachten Durchstoßen des Gehäuseelements in radialer Richtung bezogen auf die Maschinenachse der Gasturbine ein Bereich durchstoßen wird, an dem das Gehäuseelement entweder eine Aussparung auf der radialen Innenseite oder eine Vertiefung auf der radialen Außenseite aufweist, vorzugsweise bei 30%, weiter bevorzugt wenigstens 50%, noch weiter bevorzugt wenigstens 70%. Hierdurch kann das Gehäuseelement relativ dünn und somit gewichtsoptimiert ausgelegt sein, wobei die Verstärkungsbereiche zwischen den Bereichen, an denen das Gehäuseelement entweder eine Aussparung auf der radialen Innenseite oder eine Vertiefung auf der radialen Außenseite aufweist, ähnlich wie Verstärkungsrippen eine hohe Steifigkeit des Gehäuseelements bewirken.

Vorzugsweise entspricht die flächenmäßige Größe der Summe aller Bereiche, an denen das Gehäuseelement eine Aussparung auf der radialen Innenseite aufweist, zwischen 25% und 75% der flächenmäßigen Größe der Summe aller Bereiche, an denen das Gehäuseelement eine Vertiefung auf der radialen Außenseite aufweist. Mit anderen Worten sind vorzugsweise die Vertiefungen und die Aussparung in Summe flächenmäßig in etwa gleich groß.

Hierzu wird ferner vorgeschlagen, dass die Umfangskontur der Aussparung mehrere ineinander übergehende Konturabschnitte umfasst, wobei die Konturabschnitte linear oder bogenförmig ausgebildet sind. Dabei können bogenförmige Konturabschnitte kreisbogenförmig, parabelförmig oder hyperbelförmig ausgeführt sein, so dass die Konturabschnitte bzw. die gesamte Umfangskontur eine für den Spannungsverlauf günstige Ausgestaltung aufweisen bzw. aufweist.

Da das Gehäuseelement zwischen jeweils zwei Stützstreben des Turbinenzwischengehäuses einzusetzen ist und entsprechende Spannungsverläufe ausgehend von beiden Stützstreben auf das Gehäuseelement übertragen werden, wird vorgeschlagen, dass die Aussparung bezogen auf eine Mittelachse des Gehäuseelements symmetrisch ausgebildet ist, wobei vorzugsweise die Mittelachse bezogen auf einen Zustand, in dem das Gehäuseelement am Turbinenzwischengehäuse montiert oder integriert ist, in Umfangsrichtung im Wesentlichen in der Mitte zwischen zwei Stützstreben des Turbinenzwischengehäuses angeordnet ist.

Ferner kann die Aussparung in einer zur Mittelachse orthogonalen Breitenrichtung eine sich entlang der Mittelachse ändernde Breite aufweisen, vorzugsweise eine sich kontinuierlich ändernde Breite aufweisen. Hierzu wird ergänzend vorgeschlagen, dass die Breite der Aussparung ihren kleinsten Wert in einem Bereich aufweist, der etwa 20% einer Länge der Aussparung beträgt, wobei die Länge entlang der Mittelachse gemessen ist, wobei der Bereich vorzugsweise so angeordnet ist, dass er die Position der halben Länge umfasst.

Durch diesen Breitenverlauf entlang der Mittellinie bzw. Länge des Verstärkungselements ergibt sich eine Art Taillierung der Umfangskontur der Aussparung in ihrem mittleren Bereich. Man kann die Umfangskontur in einer Draufsicht auch als schmetterlingsartig oder ambossartig umschrieben.

Alternativ ist es auch möglich, dass mehrere Aussparungen vorgesehen sind, die bezogen auf eine Mittelachse des Gehäuseelements symmetrisch angeordnet sind, wobei vorzugsweise die Mittelachse bezogen auf einen Zustand, in dem das Gehäuseelement am Turbinenzwischengehäuse montiert oder integriert ist, in Umfangsrichtung im Wesentlichen in der Mitte zwischen zwei Stützstreben des Turbinenzwischengehäuses angeordnet ist.

Ferner betrifft die Erfindung auch ein Turbinenzwischengehäuse einer Gasturbine, insbesondere Fluggasturbine, umfassend mehrere in Umfangsrichtung verteilt angeordnete Stützstreben, die sich in radialer Richtung durch eine Heißgas führende Ringkammer erstrecken, derart, dass mittels der Stützstreben wenigstens ein radial innen liegender Nabenabschnitt für die Aufnahme von wenigstens einer Welle der Gasturbine gelagert ist, wobei zwischen jeweils zwei Stützstreben entlang dem Außenumfang des Turbinenzwischengehäuses ein Gehäuseelement mit wenigstens einem der obigen Merkmale eingesetzt ist.

Schließlich betrifft die Erfindung auch eine Gasturbine, insbesondere Fluggasturbine mit einem solchen Turbinenzwischengehäuse. Dabei ist das Turbinenzwischengehäuse mit mehreren in Umfangsrichtung nebeneinander angeordneten Gehäuseelementen bevorzugt zwischen einer Hochdruckturbine und einer Niederdruckturbine vorgesehen.

Nachfolgend wird die Erfindung unter Bezugnahme auf die anliegenden Figuren beispielhaft und nicht einschränkend beschrieben.
Fig. 1 zeigt vereinfacht und schematisch einen perspektivischen Ausschnitt eines Turbinenzwischengehäuses mit zwei von einem Stützstrebenbefestigungsbereich ausgehenden Gehäuseelementen.
Fig. 2 zeigt in den Teilfiguren 2A und 2B vereinfachte perspektivische Teilschnittdarstellungen des Gehäuseelements der Fig. 1 in einer schrägen seitlichen (in Umfangsrichtung) Draufsicht von außen (Fig. 2A) und von innen (Fig. 2B)
Fig. 3 zeigt in den Teilfiguren 3A und 3B vereinfachte perspektivische Teilschnittdarstellungen des Gehäuseelements der Fig. 2 in einer schrägen frontalen (in axialer Richtung) Draufsicht von außen (Fig. 3A) und von innen (Fig. 3B).
Fig. 4 zeigt in Teilfigur 4A einen Schnitt entlang der Schnittlinie IV-IV der Fig. 3A bzw. der Fig. 2A und in Teilfigur 4B einen Schnitt entlang der Schnittlinie V-V der Fig. 3B.

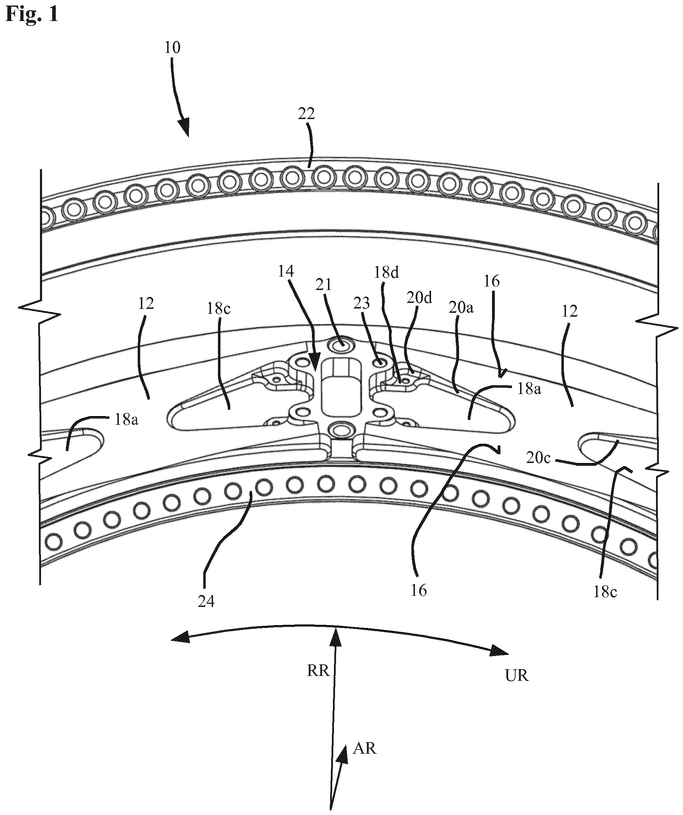

Fig. 1 zeigt einen vereinfachten perspektivischen Ausschnitt eines Turbinenzwischengehäuses 10 mit zwei flächig ausgebildeten Gehäuseelementen 12. Die beiden Gehäuseelemente 12 sind jeweils nur teilweise dargestellt und erstrecken sich in Umfangsrichtung UR ausgehend von einem Anschlussbereich 14, in dem die Gehäuseelemente 12 mit einer hier nicht dargestellten Stützstrebe verbunden sind, die sich ausgehend vom Anschlussbereich 14 in im Wesentlichen radialer Richtung RR nach innen erstreckt. In Umfangsrichtung UR des Turbinenzwischengehäuses 10 sind mehrere derartige Streben verteilt angeordnet. Zwischen zwei solchen Streben bzw. zwischen zwei Anschlussbereichen 14 ist jeweils ein Gehäuseelement 12 vorgesehen. Mit AR ist die axiale Richtung des Turbinenzwischengehäuses gekennzeichnet.

Die Richtungsangaben "Axial-" bzw. "axial", "Radial-" bzw. "radial" und "Umfangs-" beziehen sich stets auf die Maschinenachse der Gasturbine, sofern sich aus dem Kontext nicht explizit oder implizit etwas anderes ergibt.

Das Gehäuseelement 12 weist ausgehend von einer Außenfläche 16 mehrere Vertiefungen 18a, 18c und 18d auf, wobei der Übergang von der Außenfläche 16 zu einer Vertiefung 18a, 18c, 18d oder von einer Vertiefung 18d zu einer weiteren Vertiefung 18a durch eine jeweilige stufenartige Kanten 20a, 20c, 20d gebildet ist. Die Kanten bzw. Übergänge 20a, 20c, 20d bilden einzeln oder gemeinsam eine jeweilige Umfangskontur für eine Vertiefung 18a, 18c, 18d.

Die Gehäuseelemente 12 sind in den Anschlussbereichen 14 mittels verschiedener Befestigungsmittel, insbesondere Schraubverbindungen 21 mit den weiteren Komponenten, wie etwa den nicht dargestellten Stützstreben, des Turbinenzwischengehäuses verbunden. In dieser Darstellung sind im Anschlussbereich 14 auch Bohrungen 23 ersichtlich, die zur Befestigung von nicht dargestellten Rohrdurchführungen dienen. Aus der Fig. 1 sind ferner zwei Anschlussflansche 22, 24 ersichtlich, die im zusammengesetzten Zustand einer das Turbinenzwischengehäuse umfassenden Gasturbine, insbesondere Fluggasturbine, an einem korrespondierenden Gegenflansch einer Turbinenkomponente, etwa Hochdruckturbine oder Niederdruckturbine anliegen, so dass das Turbinenzwischengehäuse und die entsprechende Turbinenkomponente aneinander befestigt werden können. In der Darstellung der Fig. 1 kann der Flansch 22 dem Anschluss an die Niederdruckturbine und der Flansch 24 dem Anschluss an die Hochdruckturbine dienen.

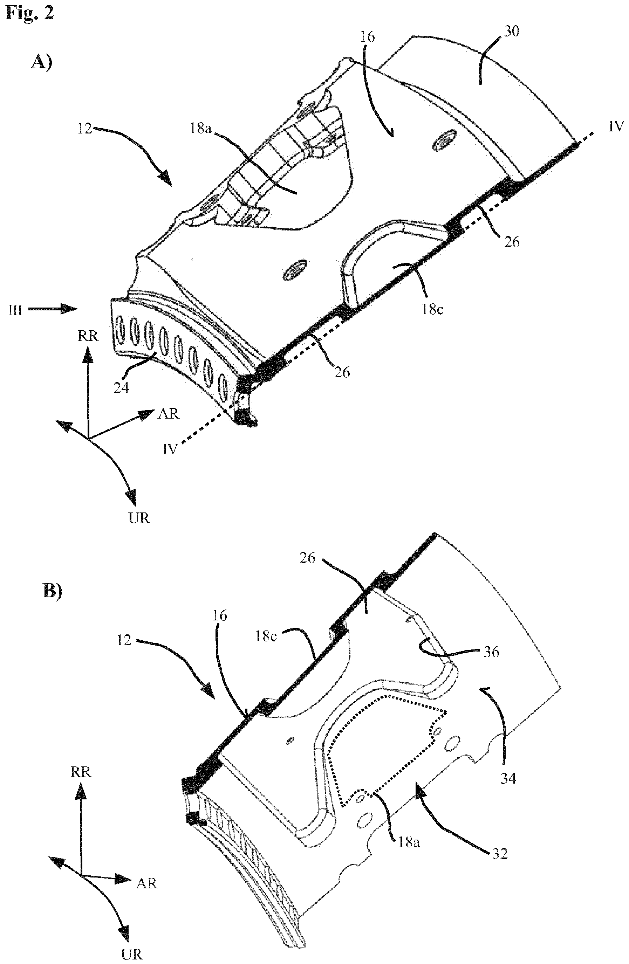

Fig. 2A zeigt das Gehäuseelement 12 in einer seitlichen perspektivischen Teilschnittdarstellung, wobei von schräg oben auf eine radiale Außenseite des Gehäuseelements 12 geblickt wird. Aus der Fig. 2A sind die Vertiefungen 18a und 18c ersichtlich, die auch in Fig. 1 identifiziert werden können, um die Orientierung zu vereinfachen. Die seitliche Teilschnittdarstellung der Fig. 2A zeigt eine schwarz ausgefüllte Querschnittsfläche des Gehäuseelements 12 im Längsschnitt. Es ist ersichtlich, dass im Gehäuseelement 12 zusätzlich zu den bezogen auf die radial außen liegende Fläche 16 ausgebildeten Vertiefungen 18a, 18c auch von radial Innen wenigstens eine Aussparung 26 im Gehäuseelement 12 ausgebildet ist. Das Ein in axialer Richtung AR hinterer Überlappungsbereich 30 des Gehäuseelements 12 stellt einen Übergangsbereich zu einer nächsten ringförmigen bzw. konischen Komponente des Turbinenzwischengehäuses dar.

Fig. 2B zeigt das Gehäuseelement in einer seitlichen perspektivischen Darstellung von schräg unten, so dass man auf eine radiale Innenseite 32 blickt. Das Gehäuseelement 12 weist eine radial innen liegende Innenflache 34 auf. In dieser Innenfläche 34 ist die Aussparung 26 ausgebildet. Der Übergang von der Innenfläche 34 zur Aussparung 26 wird durch eine stufenartige Kante 36 gebildet. Aus der Fig. 2B ist ersichtlich, dass die Aussparung 26 in Bereichen des Gehäuseelements 12 ausgebildet ist, in denen radial außen keine Vertiefung 18a, 18c ausgebildet ist, wobei in der Darstellung der Fig. 2B die Vertiefung 18a aufgrund der gewählten Blickrichtung nicht ersichtlich ist, aber ihre Lage auf der radialen Außenseite 16 durch eine gestrichelte Linie angedeutet ist.

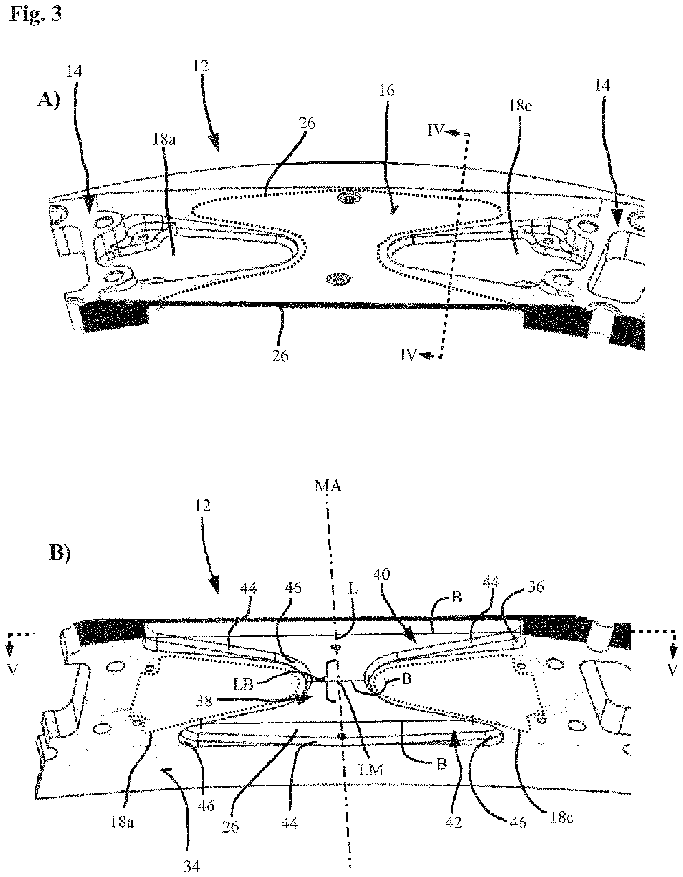

Fig. 3A zeigt das Gehäuseelement 12 in einer frontalen perspektivischen Teilschnittdarstellung, die in etwa der mit dem Pfeil III angedeuteten Blickrichtung aus der Fig. 2A entspricht. Aus der Fig. 3A ist ersichtlich, dass das Gehäuseelement 12 zwischen zwei Anschlussbereichen 14 aufgenommen bzw. eingesetzt ist. Entsprechend ist das Gehäuseelement auch zwischen zwei jeweiligen nicht dargestellten Stützstreben angeordnet, die sich in im Wesentlichen radialer Richtung von den Anschlussbereichen nach innen (in Richtung des Zentrums des Turbinenzwischengehäuses) erstrecken. Es sind wiederum die beiden Vertiefungen 18a und 18c ersichtlich und die radiale Außenfläche 16. Aus der schwarz dargestellten Schnittfläche eines Querschnitts durch das Gehäuseelements 12 ist wiederum die radial von innen ausgebildete Aussparung 26 ersichtlich, deren Ausgestaltung aufgrund der Blickrichtung nicht ersichtlich ist, aber durch die gestrichelte Linie angedeutet wird.

Fig. 3B zeigt das Gehäuseelement 12 der Fig. 3A schräg von unten, so dass der Blick freigegeben ist auf die Aussparung 26 und die Innenfläche 34 des Gehäuseelements 12. In Fig. 3B ist eine Mittelachse MA der Aussparung 26 dargestellt. Diese Mittelachse verläuft in Längsrichtung der Aussparung 26 und liegt in einer durch die radiale Richtung und die axiale Richtung aufgespannten Ebene. Die Aussparung 26 ist bevorzugt symmetrisch zur Mittelachse MA ausgebildet. Legt man für die Aussparung 26 eine mit der Mittelachse MA zusammenfallende Länge L zu Grunde, weist die Aussparung 26 eine zu dieser Länge L bzw. zur Mittelachse MA orthogonale Breite B auf. Die Breite B der Aussparung 26 ändert sich entlang der Länge L, wobei es bevorzugt ist, dass sich die Breite B kontinuierlich ändert. Einen kleinsten Wert kann die Breite B in einem Längenbereich LB einnehmen, der etwa 20% der Länge L der Aussparung 26 entspricht, wobei dieser Bereich vorzugsweise die Position LM der halben Länge bzw. der Mitte der Länge umfasst. Anders ausgedrückt weist die Aussparung 26 bezogen auf ihre Länge L einen mittleren Bereich 38 auf, der tailliert oder verengt ausgeführt ist bezogen auf einen sich in Längenrichtung L anschießenden vorderen Bereich 40 und hinteren Bereich 42. Die stufenartige Kante 36 bildet eine Umfangskontur der Aussparung 26, wobei diese Umfangskontur durch lineare Umfangsabschnitte 44 und bogenförmige Umfangsabschnitte 46 der Aussparung 26 gebildet ist. Auch in Fig. 3B sind die nicht sichtbaren Vertiefungen 18a und 18c, die auf der radialen Außenseite 16 ausgebildet sind, durch gestrichelte Linien angedeutet. Es wird hierdurch ersichtlich, dass die Aussparung 26 außerhalb der Bereiche angeordnet ist, in denen Vertiefungen 18a, 18c auf der radialen Außenseite 16 ausgebildet sind.

Die in der Figur 3B ersichtliche eine Vertiefung 26 kann auch nicht durchgehend ausgebildet sein. Es ist insbesondere möglich, dass anstatt der einen Vertiefung 26 mehrere Vertiefungen ausgebildet sind. Denkbar ist beispielsweise, dass der mittlere Bereich 38 nicht ausgespart ist, sondern die übliche Materialdicke aufweist, so dass sich zwei Aussparungen ergeben würden, die in axialer Richtung aufeinander folgen. Weiter ist es auch denkbar, dass diese zwei Aussparungen entlang der Mittelachse MA nochmals Bereiche aufweisen, die nicht ausgespart sind, so dass hierdurch insgesamt vier Aussparungen vorliegen können, die im mittleren Bereich und in axialer Richtung entlang der Mittelachse MA voneinander getrennt sind. In einem solchen Fall mit beispielsweise vier Aussparungen können jeweils zwei Aussparungen bezogen auf die Mittelachse MA symmetrisch ausgebildet sein (links und rechts der Mittelachse).

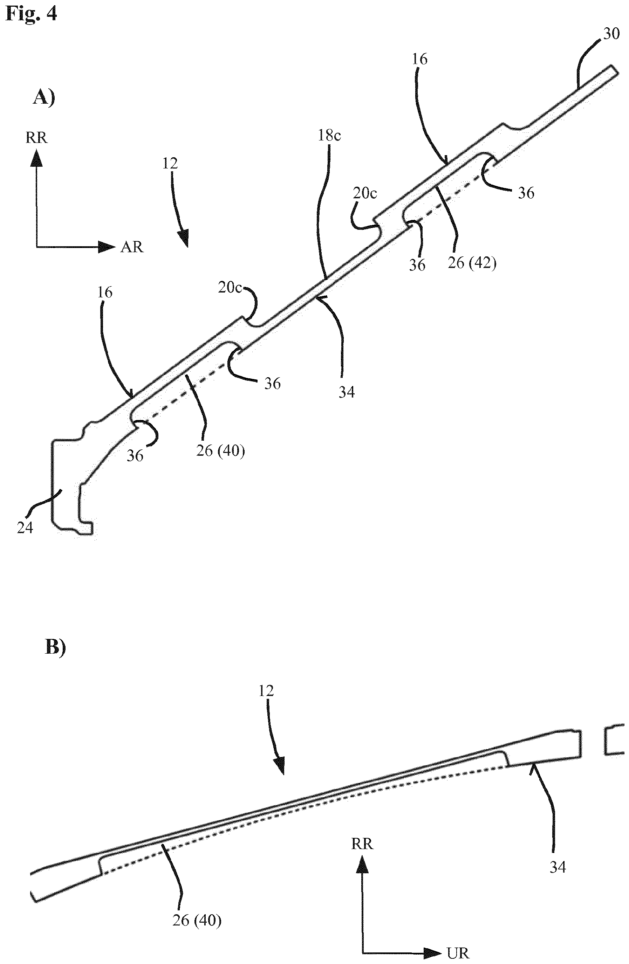

Fig. 4A zeigt eine vereinfachte Schnittdarstellung als Längsschnitt durch das Gehäuseelement 12 entsprechend etwa der Schnittlinie IV-IV der Fig. 2A und Fig. 3A. Der dargestellte Schnitt zeigt in etwa die gleiche Schnittfläche wie die schwarz ausgefüllte Schnittfläche der Fig. 2A. In der Fig. 4A sind wiederum ersichtlich die Vertiefung 18c, die in der radialen Außenfläche 16 ausgebildet ist. Ferner zeigt Fig. 3A die Aussparung 26 mit den beiden Aussparungsbereichen 40 und 42. Der Vollständigkeit halber wird noch auf den Flanschabschnitt 28 und den Überlappungsbereich 30 des Gehäuseelements 12 hingewiesen. Eine im Bereich der Aussparung 26 gezeichnete gestrichelte Linie deutet das aus dem Stand der Technik bekannte Vollprofil des Gehäuseelements 12 an. Es wird auch an dieser Stelle nochmals darauf hingewiesen, dass die Aussparung 26 nur in Bereichen ausgebildet ist, in denen auf der radialen Außenfläche 16 keine Vertiefungen 18c vorgesehen sind.

Durch die Aussparung 26 kann für jedes Gehäuseelement 12 Gewicht eingespart werden verglichen mit dem in Fig. 4A angedeuteten Vollprofil (gestrichelte Linie). Ferner wirken die Umfangsabschnitte, bzw. die stufenartige Kante 36 insbesondere auch im Zusammenwirken mit den stufenartigen Kanten 20c wie Verstärkungsrippen für das flächig ausgebildete Gehäuseelement 12, so dass im Gehäuseelement 12 ein optimaler Spannungsverlauf bei gleichzeitiger Gewichtreduzierung erreicht werden kann.

Fig. 4B zeigt noch einen Schnitt entsprechend der Schnittlinie V-V der Fig. 3B. Ersichtlich ist die in der radialen Innenfläche 34 ausgebildete Aussparung 26, insbesondere ihr Aussparungsbereich 40. Auch in dieser Darstellung wurde als gestrichelte Linie das bekannte Vollprofil des Gehäuseelements 12 eingezeichnet, so dass zumindest qualitativ ersichtlich ist, wieviel Material bezogen auf die Querschnittsfläche durch die Aussparung 26 fehlt im Vergleich mit einem herkömmlichen Vollprofil.

Durch das Vorsehen einer radial innen ausgebildeten Aussparung 26 kann das Gewicht von jedem Gehäuseelement 12 deutlich reduziert werden. Dies geht einher mit einem geringeren spezifischen Kraftstoffverbrauch, wenn die gewichtsreduzierten Gehäuseelemente 12 in einem Turbinenzwischengehäuse einer Gasturbine, insbesondere Fluggasturbine eingesetzt werden.

### Bezugszeichenliste

- 10: Turbinenzwischengehäuse
- 12: Gehäuseelement
- 14: Anschlussbereich
- 16: radiale Außenfläche
- 18a, c, d: Vertiefung
- 20a, c, d: stufenartige Kante
- 21: Schraubverbindung
- 22: Anschlussflansch
- 23: Bohrung
- 24: Anschlussflansch
- 26: Aussparung
- 28: Flanschabschnitt
- 30: Überlappungsbereich
- 32: radiale Innenseite
- 34: Innenfläche
- 36: stufenartige Kante
- 38: mittlerer Bereich
- 40: vorderer Bereich
- 42: hinterer Bereich
- 44: linearer Umfangsabschnitt
- 46: bogenförmiger Umfangsabschnitt
- B: Breite der Aussparung
- L: Länge der Aussparung
- MA: Mittelachse der Aussparung
- LB: Längenbereich
- LM: Mitte der Länge
- AR: axialer Richtung
- RR: radiale Richtung
- UR: Umfangsrichtung

## Patentansprüche

1. Gehäuseelement für ein Turbinenzwischengehäuse (10) einer Gasturbine, insbesondere Fluggasturbine, wobei das Gehäuseelement (12) im Turbinenzwischengehäuse (10) radial außen zwischen jeweils zwei von mehreren in Umfangsrichtung (UR) verteilt angeordneten Stützstreben einsetzbar oder eingesetzt ist, wobei das Gehäuseelement (12) im Wesentlichen flächig ausgebildet ist und bezogen auf seine radiale Außenseite (16) mehrere Vertiefungen (18a, 18c,18d) aufweist, **dadurch gekennzeichnet, dass** das Gehäuseelement (12) auf seiner radialen Innenseite (32, 34) wenigstens eine Aussparung (26) aufweist, die außerhalb der Bereiche angeordnet ist, in denen Vertiefungen (18a, 18c, 18d) auf der radialen Außenseite (16) ausgebildet sind.

2. Gehäuseelement nach Anspruch 1, **dadurch gekennzeichnet, dass** die Vertiefungen (18a, 18c, 18d) so ausgebildet sind, dass im Gehäuseelement (12) mehrere Flächen auf unterschiedlichem Niveau ausgebildet sind, die miteinander über stufenartige Kanten (20a, 20c, 20d) verbunden sind.

3. Gehäuseelement nach Anspruch 1 oder 2, **dadurch gekennzeichnet, dass** die Aussparung (26) auf der radialen Innenseite (32, 34) eine Umfangskontur aufweist, die wenigstens abschnittsweise komplementär zu einer Umfangskontur einer auf der radialen Außenseite ausgebildeten Vertiefung (18a, 18c, 18d) ausgebildet ist.

4. Gehäuseelement nach Anspruch 3, **dadurch gekennzeichnet, dass** die Umfangskontur der Aussparung (26) mehrere ineinander übergehende Konturabschnitte (44, 46) umfasst, wobei die Konturabschnitte (44, 46) linear oder bogenförmig ausgebildet sind.

5. Gehäuseelement nach einem der vorhergehenden Ansprüche, **dadurch gekennzeichnet, dass** die Aussparung (26) bezogen auf eine Mittelachse (MA) des Gehäuseelements (12) symmetrisch ausgebildet ist, wobei vorzugsweise die Mittelachse (MA) bezogen auf einen Zustand, in dem das Gehäuseelement am Turbinenzwischengehäuse (10) montiert ist, in Umfangsrichtung (UR) im Wesentlichen in der Mitte zwischen zwei Stützstreben des Turbinenzwischengehäuses (10) angeordnet ist.

6. Gehäuseelement nach Anspruch 5, **dadurch gekennzeichnet, dass** die Aussparung (26) in einer zur Mittelachse (MA) orthogonalen Breitenrichtung eine sich entlang der Mittelachse (MA) ändernde Breite (B) aufweist, vorzugsweise eine sich kontinuierlich ändernde Breite aufweist.

7. Gehäuseelement nach Anspruch 6, **dadurch gekennzeichnet, dass** die Breite (B) der Aussparung (26) ihren kleinsten Wert in einem Bereich (LB) aufweist, der etwa 20% einer Länge (L) der Aussparung beträgt, wobei die Länge (L) entlang der Mittelachse (MA) gemessen ist, wobei der Bereich (LB) vorzugsweise so angeordnet ist, dass er die Position der halben Länge (LM) umfasst.

8. Gehäuseelement nach einem der Ansprüche 1 bis 4, **dadurch gekennzeichnet, dass** mehrere Aussparungen vorgesehen sind, die bezogen auf eine Mittelachse (MA) des Gehäuseelements (12) symmetrisch angeordnet sind, wobei vorzugsweise die Mittelachse (MA) bezogen auf einen Zustand, in dem das Gehäuseelement am Turbinenzwischengehäuse (10) montiert ist, in Umfangsrichtung (UR) im Wesentlichen in der Mitte zwischen zwei Stützstreben des Turbinenzwischengehäuses (10) angeordnet ist.

9. Turbinenzwischengehäuse einer Gasturbine, insbesondere Fluggasturbine, umfassend mehrere in Umfangsrichtung (UR) verteilt angeordnete Stützstreben, die sich in radialer Richtung (RR) durch eine Heißgas führende Ringkammer erstrecken, derart, dass mittels der Stützstreben wenigstens ein radial innen liegender Nabenabschnitt für die Aufnahme von wenigstens einer Welle der Gasturbine gelagert ist, **dadurch gekennzeichnet, dass** zwischen jeweils zwei Stützstreben entlang dem Außenumfang des Turbinenzwischengehäuses (10) ein Gehäuseelement (12) nach einem der vorhergehenden Ansprüche eingesetzt ist

10. Gasturbine, insbesondere Fluggasturbine mit einem Turbinenzwischengehäuse (10) nach Anspruch 9, welche vorzugsweise zwischen eine Hochdruckturbine und eine Niederdruckturbine oder zwischen einer Hochdruckturbine und einer Mitteldruckturbine oder zwischen einer Mitteldruckturbine und einer Niederdruckturbine angeordnet ist.

## Claims

1. Casing element for an intermediate turbine casing (10) of a gas turbine, in particular an aircraft gas turbine, the casing element (12) being insertable or inserted radially outwards in the intermediate turbine casing (10) between each two of a plurality of support struts that are arranged so as to be distributed in the circumferential direction (UR), the casing element (12) being substantially planar and having a plurality of depressions (18a, 18c, 18d) in the radially outer surface (16) thereof, **characterized in that** the casing element (12) has at least one recess (26) in the radially inner surface (32, 34) thereof, which recess is arranged outside the regions in which depressions (18a, 18c, 18d) are formed in the radially outer surface (16).

2. Casing element according to claim 1, **characterized in that** the depressions (18a, 18c, 18d) are formed such that a plurality of surfaces is formed in the casing element (12) at different levels, which surfaces are interconnected by means of step-like edges (20a, 20c, 20d).

3. Casing element according to either claim 1 or claim 2, **characterized in that** the recess (26) in the radially inner surface (32, 34) has a peripheral contour which is complementary, at least in portions, to a peripheral contour of a depression (18a, 18c, 18d) formed in the radially outer surface.

4. Casing element according to claim 3, **characterized in that** the peripheral contour of the recess (26) comprises a plurality of contour portions (44, 46) which transition into one another, the contour portions (44, 46) being linear or curved.

5. Casing element according to any of the preceding claims, **characterized in that** the recess (26) is formed symmetrically with respect to a central axis (MA) of the casing element (12), the central axis (MA) preferably being arranged, when the casing element is mounted on the intermediate turbine casing (10), substantially in the middle between two support struts of the intermediate turbine casing (10) in the circumferential direction (UR).

6. Casing element according to claim 5, **characterized in that** the recess (26) has a width (B) which varies along the central axis (MA) in a width direction orthogonal to the central axis (MA), and preferably has a continuously varying width.

7. Casing element according to claim 6, **characterized in that** the width (B) of the recess (26) has its smallest value in a region (LB) which is approximately 20% of a length (L) of the recess, the length (L) being measured along the central axis (MA), the region (LB) preferably being arranged such that it includes the position of the half-length (LM).

8. Casing element according to any of claims 1 to 4, **characterized in that** a plurality of recesses is provided, which recesses are arranged symmetrically with respect to a central axis (MA) of the casing element (12), the central axis (MA) preferably being arranged, when the casing element is mounted on the intermediate turbine casing (10), substantially in the middle between two support struts of the intermediate turbine casing (10) in the circumferential direction (UR).

9. Intermediate turbine casing of a gas turbine, in particular an aircraft gas turbine, comprising a plurality of support struts which are arranged so as to be distributed in the circumferential direction (UR) and extend in the radial direction (RR) through a hot-gas-conducting annular chamber such that at least one radially inner hub portion for accommodating at least one shaft of the gas turbine is mounted by means of the support struts, **characterized in that** a casing element (12) according to any of the preceding claims is inserted between each two support struts along the outer circumference of the intermediate turbine casing (10).

10. Gas turbine, in particular aircraft gas turbine, comprising an intermediate turbine casing (10) according to claim 9, which turbine is preferably arranged between a high-pressure turbine and a low-pressure turbine or between a high-pressure turbine and a medium-pressure turbine or between a medium-pressure turbine and a low-pressure turbine.

## Revendications

1. Elément de carter destiné à un carter intermédiaire de turbine (10) d'une turbine à gaz , en particulier d'une turbine à gaz d'avion, l'élément de carter (12) pouvant être inséré ou étant inséré dans le carter intermédiaire de turbine (10) radialement à l'extérieur à chaque fois entre deux de plusieurs montants de support disposés de façon répartie dans la direction circonférentielle (UR), l'élément de carter (12) étant conçu sensiblement de façon plane et comportant plusieurs creux (18a, 18c, 18d) par rapport à son côté extérieur radial (16), **caractérisé en ce que**, sur son côté intérieur radial (32, 34), l'élément de carter (12) comporte au moins un évidement (26) qui est ménagé à l'extérieur des zones dans lesquelles des creux (18a, 18c, 18d) sont formés sur le côté extérieur radial (16).

2. Elément de carter selon la revendication 1, **caractérisé en ce que** les creux (18a, 18c, 18d) sont formés de telle sorte que, dans l'élément de carter (12), plusieurs surfaces sont formées à un niveau différent, lesquelles sont raccordées les unes aux autres par le biais d'arêtes (20a, 20c, 20d) en forme de gradins.

3. Elément de carter selon la revendication 1 ou 2, **caractérisé en ce que**, sur le côté intérieur radial (32, 34), l'évidement (26) présente un contour circonférentiel qui est conçu pour être au moins par endroits complémentaire à un contour circonférentiel d'un creux (18a, 18c, 18d) formé sur le contour extérieur radial.

4. Elément de carter selon la revendication 3, **caractérisé en ce que** le contour circonférentiel de l'évidement (26) comporte plusieurs portions de contour (44, 46) se fondant les uns dans les autres, les portions de contour (44, 46) étant conçus pour être linéaires ou incurvés.

5. Elément de carter selon l'une des revendications précédentes, **caractérisé en ce que** l'évidement (26) est conçu pour être symétrique par rapport à un axe central (MA) de l'élément de carter (12), l'axe central (MA) étant disposé dans la direction circonférentielle (UR) sensiblement au milieu entre deux montants de support du carter intermédiaire de turbine (10), par rapport à un état dans lequel l'élément de carter est monté sur le carter intermédiaire de turbine (10).

6. Elément de carter selon la revendication 5, **caractérisé en ce que**, dans une direction en largeur orthogonale à l'axe central (MA), l'évidement (26) a une largeur (B) variant le long de l'axe central (MA), de préférence une largeur variant de façon continue.

7. Elément de carter selon la revendication 6, **caractérisé en ce que** la largeur (B) de l'évidement (26) a sa valeur la plus faible dans une zone (LB) qui est environ égale à 20 % d'une longueur (L) de l'évidement, la longueur (L) étant mesurée le long de l'axe central (MA), la zone (LB) étant de préférence disposée de manière à comprendre la position de la demi-longueur (LM).

8. Elément de carter selon l'une des revendications 1 à 4, **caractérisé en ce qu'**il est prévu plusieurs évidements qui sont disposés de façon symétrique par rapport à un axe central (MA) de l'élément de carter (12), l'axe central (MA) étant de préférence disposé dans la direction circonférentielle (UR) sensiblement au milieu entre deux montants de support du carter intermédiaire de turbine (10), par rapport à un état dans lequel l'élément de carter est monté sur le carter intermédiaire de turbine (10).

9. Carter intermédiaire de turbine d'une turbine à gaz, en particulier d'une turbine à gaz d'avion, comprenant plusieurs montants de support qui sont disposés de façon répartie dans la direction circonférentielle (UR) et qui s'étendent dans la direction radiale (RR) à travers une chambre annulaire conduisant des gaz chauds de telle sorte qu'au moins une portion de moyeu située radialement à l'intérieur, est montée au moyen des montants de support, afin de recevoir au moins un arbre de la turbine à gaz, **caractérisé en ce qu'**un élément de carter (12) selon l'une des revendications précédentes est inséré à chaque fois entre deux montants de support le long de la circonférence extérieure du carter intermédiaire de turbine (10).

10. Turbine à gaz, en particulier turbine à gaz d'avion, comprenant un carter intermédiaire de turbine (10) selon la revendication 9, laquelle est disposée de préférence entre une turbine à haute pression et une turbine à basse pression ou entre une turbine à haute pression et une turbine à moyenne pression ou entre une turbine à moyenne pression et une turbine à basse pression.
